# EUROPEAN PATENT SPECIFICATION

(11) **EP 1 013 168 B1**
(45) Date of publication and mention of the grant of the patent: **29.10.2003**
(21) Application number: 99125834.4
(22) Date of filing: 23.12.1999
(51) Int. Cl.: A01K 87/02

(54) **Fishing rod**
Angelrute
Canne à pêche

(30) Priority: 25.12.1998 JP 36949998; 18.03.1999 JP 7406199; 27.07.1999 JP 21215699
(43) Date of publication of application: 28.06.2000
(73) Proprietor: DAIWA SEIKO INC., Higashikurume-shi, Tokyo (JP)
(72) Inventor: Kameda, Kenichi, Higashikurume-shi, Tokyo (JP); Takamatsu, Nobuaki, Higashimurayama-shi, Tokyo (JP); Okamoto, Toshihisa, Kamifukuoka-shi, Saitama (JP)
(74) Representative: Grünecker, Kinkeldey, Stockmair & Schwanhäusser Anwaltssozietät

(56) References cited:
- EP-A- 0 610 037
- US-A- 4 083 140

## Description

The present invention relates to a fishing rod, and more particularly to a fishing rod characterized in portions for joining rods to each other.

### 2. Description of the Related Art

Hitherto, a fishing rod has a structure that a small-diameter rod is joined to a large-diameter rod by a swing type joining method, a parallel type joining method or a facet type joining method. In general, each rod is constituted by winding so-called prepreg which is formed by orienting reinforced fibers which are impregnated with synthetic resin. The rods are structured according to their portions such that the direction of orientation of the reinforced fibers of the prepreg, the elastic modulus, the quantity of the impregnated resin and the number of windings are independently set.

In a case of a swing type fishing rod, the foregoing rods are structured such that the outer surface of the base portion of the tip section of the rod (the small-diameter rod) and the inner surface of the tip section of the butt section of the rod (the large-diameter rod) are frictionally joined to each other. Thus, the two rods are joined to each other. The joint portion of each rod has a reinforcing layer in addition to the body layer which constitutes the rod. The reinforcing layer is constituted by a reinforcing prepreg formed by orienting reinforced fibers in the axial direction or the circumferential direction.

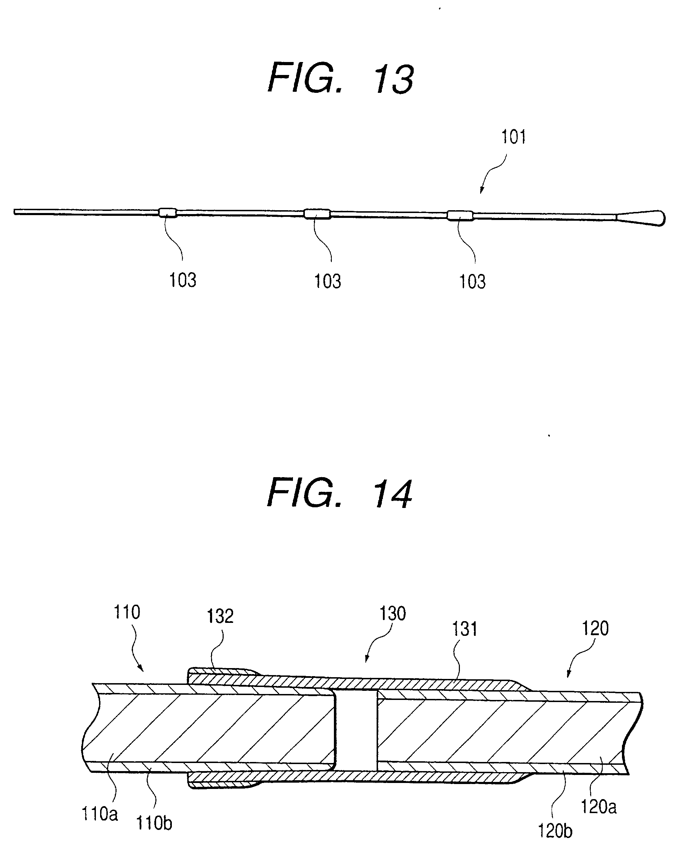

In addition, as shown in Fig. 13, a fishing rod 101 has a structure that a small-diameter rod is joined to a large-diameter rod (each joint portion is given reference numeral 103). Usually, each rod for constituting the fishing rod is formed into a hollow shape. As a structure which is capable of preventing crush or breakage even if the rod is bent strongly, a solid rod is sometimes employed. The solid rod permits the diameter to be reduced and improvement in the operability if the material and the bending rigidity are the same as those of the hollow rod.

The above-mentioned conventional structure, however, suffers from insufficient strength and rigidity of the joint portions. If the conventional fishing rod is repeatedly used, deformation sometimes occurs owing to shearing force and plastic warp occurs. Therefore, there arises a problem in that a state of joining becomes worse. To overcome the foregoing problem, it might be considered feasible to elongate the joint portions. If the joint portions are elongated excessively, deflection balance of the overall body of the fishing rod is changed for the worse or the weight is enlarged excessively. Further, in case of using the solid rod, the characteristic of the solid rod, that is, the characteristic that even a small-diameter rod permits great deflection and exhibits satisfactory operability cannot be realized.

### SUMMARY OF THE INVENTION

An object of the present invention is to provide a fishing rod which is capable of preventing plastic deformation and reduction in the rigidity of the joint portions and improving a state of joint.

To solve the problems, there is provided a fishing rod including: a small-diameter rod (1, 110, 140); and a large-diameter rod (11, 120, 150) jointed to said small-diameter rod (1, 110, 140), so as to define a joint portion (R, 130), wherein a reinforcing prepreg (5, 6, 7, 15, 16, 17, 20, 22, 23, 35, 40, 51, 53, 61, 63, 70, 81, 91, 131, 142, 152) having reinforced fibers oriented in an inclined direction is disposed around said joint portion (R, 130).

As described above, winding of the reinforcing prepreg (a bias layer) is performed in which the reinforced fibers are oriented in the inclined direction so that deformation caused from the shearing force is prevented. Thus, the strength of the joint portions can be increased. Note that the reinforcing prepreg may be wound around either of the joint portion of the large-diameter rod or that of the small-diameter rod. It is preferable that the reinforcing prepreg is wound around each of the two joint portions.

### BRIEF DESCRIPTION OF THE DRAWINGS

Fig. 1 is a partial cross sectional view showing a joint portion according to a first embodiment of the present invention in which the present invention is applied to a swing-type fishing rod;
Fig. 2A is a diagram showing the layout of prepregs which constitute a small-diameter rod having the joint portion shown in Fig. 1;
Fig. 2B is a diagram showing the layout of prepregs which constitute the small-diameter rod having the joint portion shown in Fig. 1;
Fig. 3 is a partial cross sectional view showing a joint portion according to a second embodiment of the present invention;
Fig. 4 is a partial cross sectional view showing a joint portion according to a third embodiment of the present invention;
Fig. 5 is a partial cross sectional view showing a joint portion according to a fourth embodiment of the present invention;
Fig. 6 is a partial cross sectional view showing a joint portion according to a fifth embodiment of the present invention;
Fig. 7 is a partial cross sectional view showing a joint portion according to a sixth embodiment of the present invention;
Fig. 8 is a partial cross sectional view showing a joint portion according to a seventh embodiment of the present invention;
Fig. 9 is a partial cross sectional view showing a joint portion according to an eighth embodiment of the present invention;
Fig. 10 is a partial cross sectional view showing a joint portion according to a ninth embodiment of the present invention;
Fig. 11 is a diagram showing a preferred structure of the joint portion;
Fig. 12 is a diagram showing a preferred quantity of fibers in the layers at each position of the joint portion;
Fig. 13 is a diagram showing the overall shape of a fishing rod;
Fig. 14 is a diagram showing a joint portion of the fishing rod according to a tenth embodiment of the present invention;
Fig. 15 is a diagram showing another structure of the joint portion of the fishing rod according to the tenth embodiment of the present invention;
Fig. 16 is a diagram showing another structure of the joint portion of the fishing rod according to the tenth embodiment of the present invention; and
Fig. 17 is a diagram showing another structure of the joint portion of the fishing rod according to the tenth embodiment of the present invention.

### DETAILED DESCRIPTION OF THE PREFERRED EMBODIMENTS

Embodiments of the present invention will now be described with reference to the drawings.

### (First Embodiment)

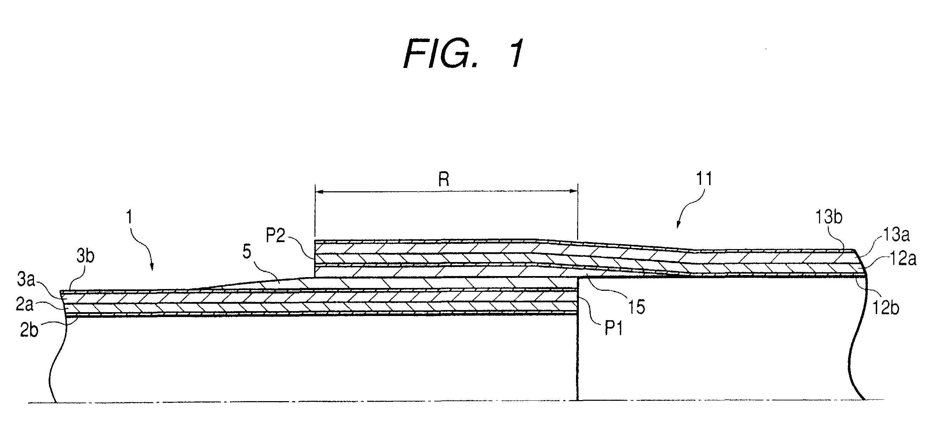

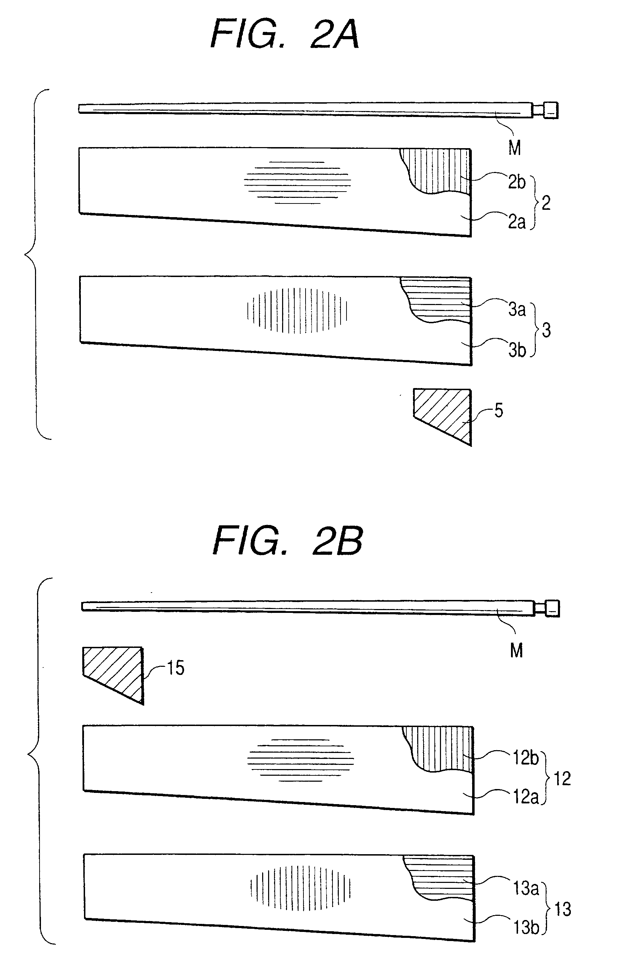

Figs. 1 to 2B show a first embodiment of the present invention. Referring to Fig. 1, reference numeral 1 represents a small-diameter rod and 11 represents a large-diameter rod. Symbol R represents a joint portion for joining the two rods. As shown in Fig. 2, each rod is constituted by winding a reinforced fiber prepreg (the body prepreg which constitutes the overall body of the rod) formed such that reinforced fibers are impregnated with synthetic resin around a mandrel M (Fig. 2A shows the small-diameter rod and Fig. 2B shows the large-diameter rod).

In the foregoing case, the body prepreg is usually structured as follows. Since winding of the prepreg is performed, the body layer of the rod is constituted. Referring to Fig. 2A, the small-diameter rod will now be described. The large-diameter rod shown in Fig. 2B is omitted from description.

The body prepreg incorporates a first prepreg 2 constituted by backing a prepreg 2b having reinforced fibers oriented in the circumferential direction on a prepreg 2a formed by orienting reinforced fibers in the axial direction. Moreover, the body prepreg incorporates a second prepreg 3 constituted by backing a prepreg 3a having reinforced fibers oriented in the axial direction on a prepreg 3b having reinforced fibers oriented in the circumferential direction. The rods are manufactured by sequentially winding the body prepregs 2 and 3 around a mandrel M. Then, usual processes are performed which include a heating process, a process for removing the mandrel and a polishing process.

As a result, the body layer of the small-diameter rod 1 is, as shown in Fig. 1, constituted by a circumferential-directional fiber layer (an inner layer) 2b, axial-directional fiber layers (intermediate layers) 2a and 3a and a circumferential-directional fiber layer (an outer layer) 3b, sequentially from the inner periphery side. A structure will now be considered in which the circumferential-directional fiber layers are disposed on both inner side and the outer aide and the axial-directional fiber layer (or a layer mainly composed of the axial-directional fiber layer) is disposed in an intermediate portion so that the body layer is formed. It is preferable that the elastic modulus of the fiber of the prepreg for constituting the circumferential-directional fiber layer is 24 ton/mm² to 50 ton/mm², the quantity of impregnated resin is 25 wt% to 50 wt% and the thickness of the prepreg is 0.06 mm or smaller. Moreover, it is preferable that the elastic modulus of the fiber of the prepreg for constituting the axial-directional fiber layer is 40 ton/mm² to 90 ton/mm², the quantity of impregnated resin is 10 wt% to 28 wt%, the thickness of the prepreg is 0.14 mm or smaller. Further, it is preferable that the difference in the two elastic moduli is 50 % or lower. When the above-mentioned structure is employed, the strength can stably be increased. Moreover, the specific strength and the specific rigidity can be increased. Also the large-diameter rod 11 is constituted by a circumferential-directional fiber layer (an inner layer) 12b, axial-directional fiber layers (intermediate layers) 12a and 13a and a circumferential-directional fiber layer (an outer layer) 13b.

Reinforcing prepregs 5 and 15 are wound around the joint portion R of each rod, that is, the base portion of the small-diameter rod 1 and the tip portion of the large-diameter rod 11. Each of the prepregs 5 and 15 has a structure that a prepreg having reinforced fibers oriented to make an angle of - 45° is superposed on a prepreg having reinforced fibers oriented to make an angle of + 45° from the axial direction. As shown in Figs. 2A and 2B, a state is realized in which reinforced fibers are oriented to intersect one another. The foregoing prepregs are wound around the outer surface of the base portion of the small-diameter rod 1 and the inner surface of the tip portion of the large-diameter rod 11.

As described above, the reinforcing prepreg having the reinforced fibers oriented to intersect one another is wound around the joint portion R of each rod. Thus, the shearing elastic modulus of the joint portion can be raised to several times that of a structure which does not wind the reinforcing prepreg. Therefore, shearing deformation and plastic bending (bending in the form of a wedge facing side) can effectively be prevented. As a result, the strength of the joint portion can be increased. Since the strength can be increased, the length of the joint portion R can be shortened, Hence it follows that the overall weight of the fishing rod can be reduced.

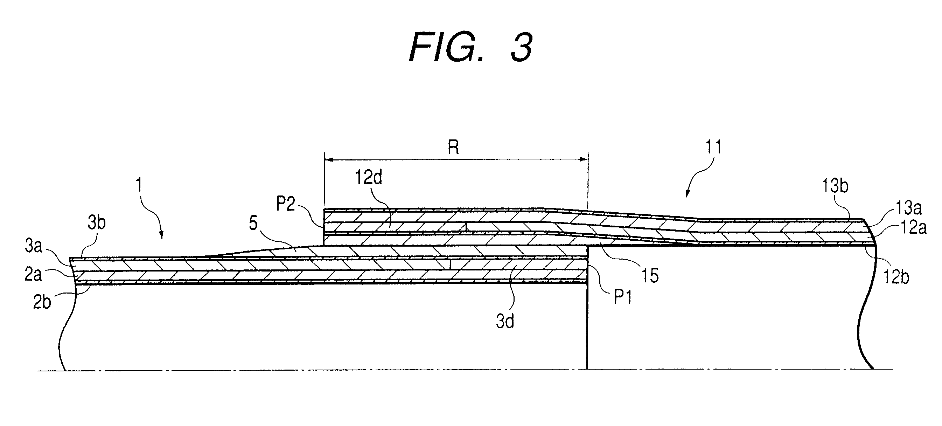

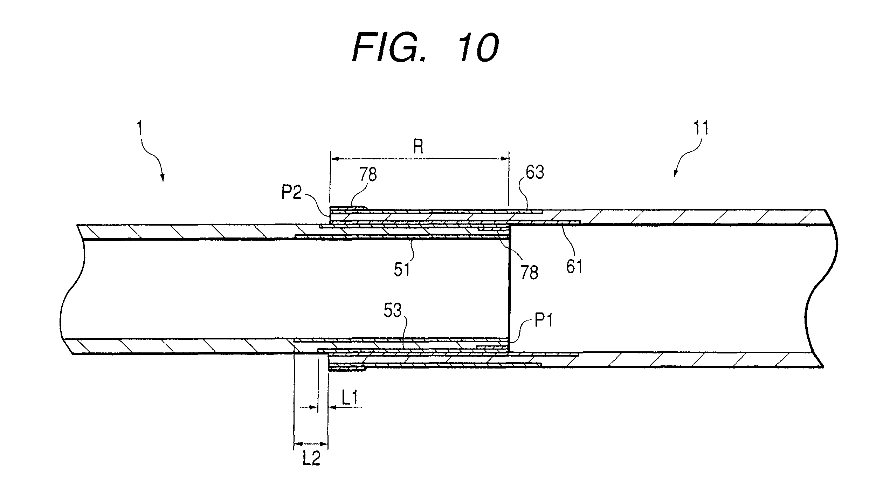

A specific structure of the reinforcing prepreg provided for the joint portion and a variety of modifications will now be described.
(1) Although it is preferable that the reinforcing prepreg is wound around each of the large-diameter rod and the small-diameter rod, the reinforcing prepreg may be wound around only either rod. Although the drawing shows the structure in which the prepregs 5 and 15 are superposed to cause the reinforced fibers to intersect one another, a structure may be employed in which the prepreg simply structured such that the reinforced fibers are oriented in an inclined direction is wound around an arbitrary position. For example, in such a manner that when the reinforced fibers of the prepreg for the small-diameter rod are oriented to make an angle of - 45°, the reinforced fibers of the prepreg for the large-diameter rod are oriented to make an angle of + 45°, it is preferable that the reinforced fibers of the two prepregs intersect one another.
   The structure shown in the drawing is arranged such that each of the reinforcing prepregs 5 and 15 has the + 45° type prepreg and the - 45° oriented prepreg which are superposed so that the reinforced fibers are intersected each other. Note that the prepregs may be independently wound around an arbitrary position of each joint portion'without the superposition of the prepregs. It is preferable that the reinforcing prepregs 5 and 15 which are previously superposed are wound such that mutual plane contact is realized, as shown in the drawing.
   When the reinforced fibera are intersected, a structure in which reinforced fibers are vertically superposed to intersect one another or a structure in which plain weaving is previously performed may be employed as a substitute for the structure in which orienting sheets are superposed.
(2) Since a direction in which the shearing elastic modulus is made to be maximal is 45°, it is most preferable that the angle of inclination of the reinforced fibers is ± 45°. in consideration of facilitating the winding operation and a necessity for preventing crush, the angle of inclination may be in the range of ±30° to ± 60°. Further, by using the reinforcing prepreg oriented in the inclined direction, since a more desired effect can be obtained as compared with the conventional structure, the angle may be in the range of ± 15° to ± 75°. As a matter of course, reinforced fibers oriented in a direction of 0° or 90° may be added into the inclined reinforced fibers.
   In case that the reinforcing prepreg and the body layer of the joint portion is formed without the layer of the fibers oriented in the circumferential direction, as shown in Fig. 1, in consideration of the prevention of crush, it is most preferable that the angle of inclination of the reinforced fibers of the reinforcing prepreg is ± 60°. In addition, the inclined angle may be in the range of ± 45° to ± 75°.
   On the other hand, when the joint portion includes the layer of the fibers oriented in the circumferential direction, as shown in Fig. 3 being a second embodiment, it is more preferable that the angle of the inclination of the reinforced fibers of the reinforcing prepreg is ± 45°, as described the above. In this case, the inclined angle may be in the range of ± 30° to ± 60°
(3) When the body layer includes a layer of the fiber oriented in the inclined direction, assuming that the thickness (the quantity of fiber) of the layer of the fiber oriented in the inclined direction in the reinforcing prepreg at the joint portion is a and the thickness (the quantity of fiber) of the layer of the fiber oriented in the inclined direction in the body layer except for the joint portion (the intermediate portion of the rod) is b, the relationship a > b is required to reduce the weight of the intermediate portion of the rod and enhance reinforcement in the joint portion. It is preferable that a is three or more times b.
(4) In view of the strength against shearing stress and the reinforcing effect, it is preferable that the thickness of the reinforcing prepreg is 0.02 mm or larger. To prevent non-uniform section and meandering of the fibers, it is preferable that the foregoing thickness is 1.5 mm or smaller. The thickness of the reinforcing prepreg layer in the joint portion is 3 % to 80 % of the overall thickness of the joint portion, preferably 7 % to 50 %.
(5) The lengthwise layout of the reinforcing prepreg may be arranged such that the reinforcing prepreg is wound around the overall portion (100 %) of the joint portion R, as shown in Fig. 1. As an alternative to this, the reinforcing prepregs may be partially superposed between the large-diameter rod and the small-diameter rod may be employed or the reinforcing prepregs may be wound without the superposition of them.
   Specifically, each of the prepregs 5 and 15 may be wound such that the prepregs superpose each.other in the intermediate portion of the joint portion R in view of stress distribution in the joint portion. As an alternative to this, the prepregs may be wound around a predetermined range from each of end surfaces P1 and P2 of the small-diameter rod and the large-diameter rod. When winding around only the end side portion of the joint portion R is performed, winding around only the small-diameter rod which can easily be broken may be performed. As an alternative to this, the reinforcing prepregs may be wound around a predetermined position from the base side portion (opposite to P1 and P2) in the joint portion of each rod. When winding around only the base side portion of the joint portion R is performed, winding around only the large-diameter rod which can easily be broken may be performed.
   The reinforcing prepreg may be wound around a region over the region of the joint portion R (see Fig. 10). Assuming that the thickness of the fiber layer oriented in the inclined direction in the joint portion is c and the thickness of the fiber layer oriented in the inclined direction in the portion over the joint portion is d, it is preferable that c > d because stress which is exerted on the portion over the joint portion is smaller than the stress which is exerted on the joint portion. In the foregoing structure, it is preferable that the thickness c is 0.02 mm to 1.5 mm and the ratio with respect to the overall thickness in the joint portion is 5 to 80 % (the overall body may be constituted by the layer of the fiber oriented in the inclined direction). It is preferable that the thickness d is 0.01 mm to 0.05 mm. It is preferable that c/d is 20 times or greater.
   As described above, the reinforcing prepregs may be wound at a variety of positions in the axial direction for a variety of lengths.
   The foregoing structures (1) to (5) may arbitrarily be combined with each other.

### (Second Embodiment)

Fig. 3 is a diagram showing a second embodiment of the present invention. Note that the same elements in the following embodiments as those according to the foregoing embodiment are given the same reference numerals. The same elements are omitted from description.

This embodiment is structured similarly to the foregoing embodiment such that the prepregs 5 and 15 are wound around the outer surface of the base portion of the small-diameter rod 1 and the inner surface of the tip portion of the large-diameter rod 11, respectively. Moreover, outside prepreg 3a of the rods 1 and inside prepregs 12a of the rod 11, which have the fibers oriented in the axial direction, respectively are cut by about 50 % from end portions P1 and P2. Moreover, prepregs 3d and 12d having reinforced fibers oriented in the circumferential direction are wound in the cut portions. As described above, the circumferential-directional prepreg is individually wound around a portion on which an influence of crush is exerted when the fishing rod is deflected. Thus, a reinforcing effect against crush can be obtained.

### (Third Embodiment)

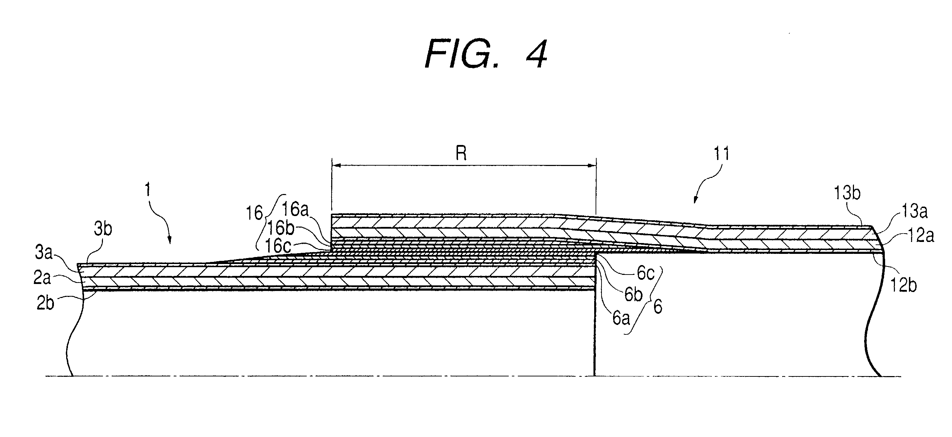

Fig. 4 is a diagram showing a third embodiment.

This embodiment is structured such that reinforcing prepregs 6 and 16 are wound around the outer surface of the base portion of the small-diameter rod 1 and the inner surface of the tip portion of the large-diameter rod 11, respectively. In this case, the reinforcing prepreg 6 is constituted by sequentially superposing prepregs 6a, 6b and 6c from the inner layer, the prepregs 6a, 6b and 6c being structured such that reinforced fibers are oriented at - 45°, 90° (in the circumferential direction) and + 45°. The reinforcing prepreg 16 is constituted by sequentially superposing prepregs 16a, 16b and 16c from the inner layer, the prepregs 16a, 16b and 16c being structured such that reinforced fibers are oriented at - 45°, 90° (in the circumferential direction) and + 45°.

To form the reinforcing prepregs, strength against crush must effectively be improved by individually inserting prepregs which have reinforced fibers oriented in the circumferential direction or superposing on arbitrary position.

### (Fourth Embodiment)

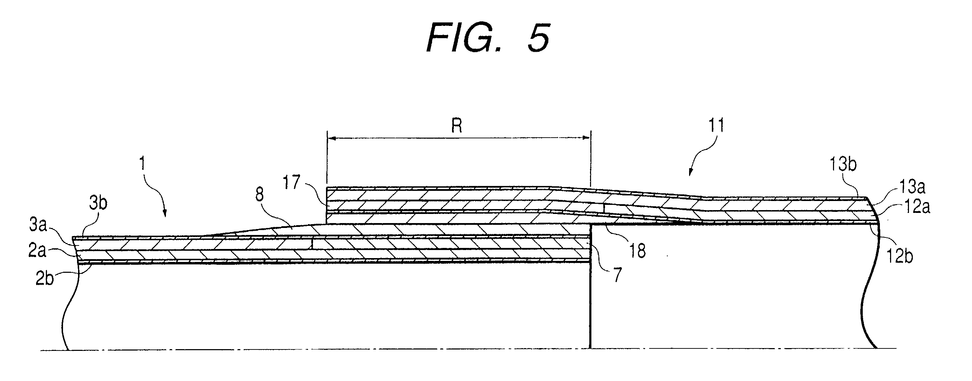

Fig. 5 is a diagram showing a fourth embodiment of the present invention.

In this embodiment, an axial-directional fiber layer 3a of the small-diameter rod 1 and an axial-directional fiber layer 12a of the large-diameter rod 11 are cut in the regions overlapping the joint portion R. Moreover, reinforcing prepregs 7 and 17 in which reinforced fibers are oriented at - 45° and + 45° are wound in the cut portions. Further, prepregs 8 and 18 having the fibers oriented in the circumferential direction are respectively wound around the outer layer side of the reinforcing prepreg 7 or the inner layer side of the reinforcing prepreg 17. As described above, an arbitrary layer in the joint portion R is cut to dispose the reinforcing prepregs 7 and 17. Moreover, the plane contact portions between the rods are formed with circumferential-directional fiber layers 8 and 18. Thus, change in the rigidity in the joint portion can be prevented and rigidity balance of the rod can be improved. In the foregoing structure, the circumferential-directional fiber layers 8 and 18 may be omitted.

### (Fifth Embodiment)

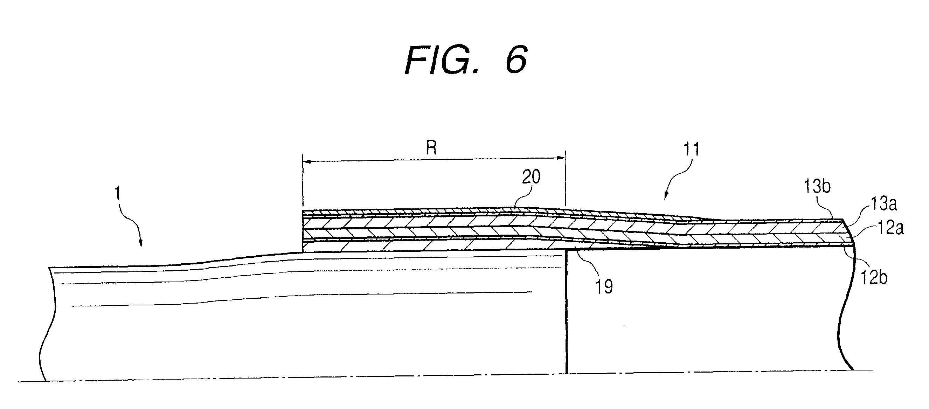

Fig. 6 is a diagram showing a fifth embodiment.

In this embodiment, a circumferential-directional prepreg 19 is wound around the innermost portion of the joint portion R of the large-diameter rod 11. Moreover, a reinforcing prepreg 20 having reinforced fibers oriented at - 45° and + 45° is wound around the outermost portion. Thus, the reinforcing prepreg 20 may be wound around the outermost layer of the large-diameter rod of the joint portion. Since the reinforcing prepreg 20 is wound around the outermost layer, disorder of the body prepreg can be prevented. Since the reinforcing prepreg 20 is disposed on the outer layer, elasticity of the reinforced fibers can effectively be used. Thus, high strength can efficiently be realized.

### (Sixth Embodiment)

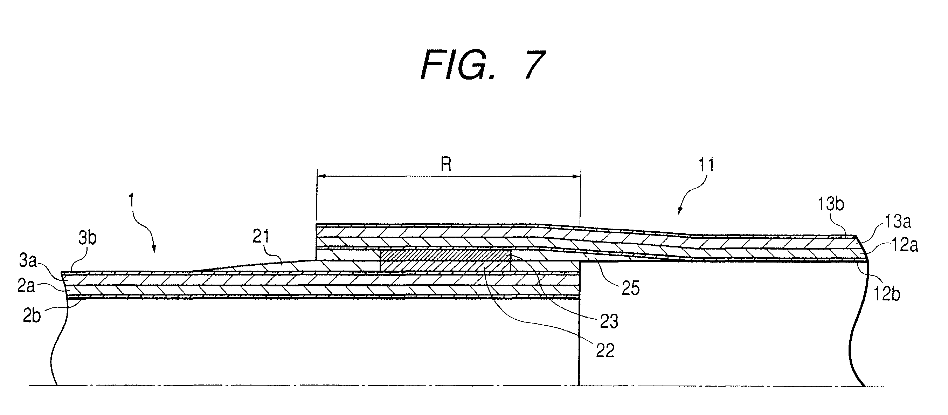

Fig. 7 is a diagram showing a sixth embodiment.

In this embodiment, circumferential-directional prepregs 21 and 25 are wound around the outermost portion of the joint portion R of the small-diameter rod 1 and the innermost portion of the joint portion R of the large-diameter rod 11, respectively. Moreover, intermediate regions of the circumferential-directional prepregs 21 and 25 are cut over predetermined ranges. Then, reinforcing prepregs 22 and 23 having reinforced fibers oriented at ± 45° are wound in the cut portions. Since the reinforcing prepregs are wound around the portion of the joint portion R in which causes deformation owing to the shearing force most, the change in the rigidity balance of the rod can be reduced.

### (Seventh Embodiment)

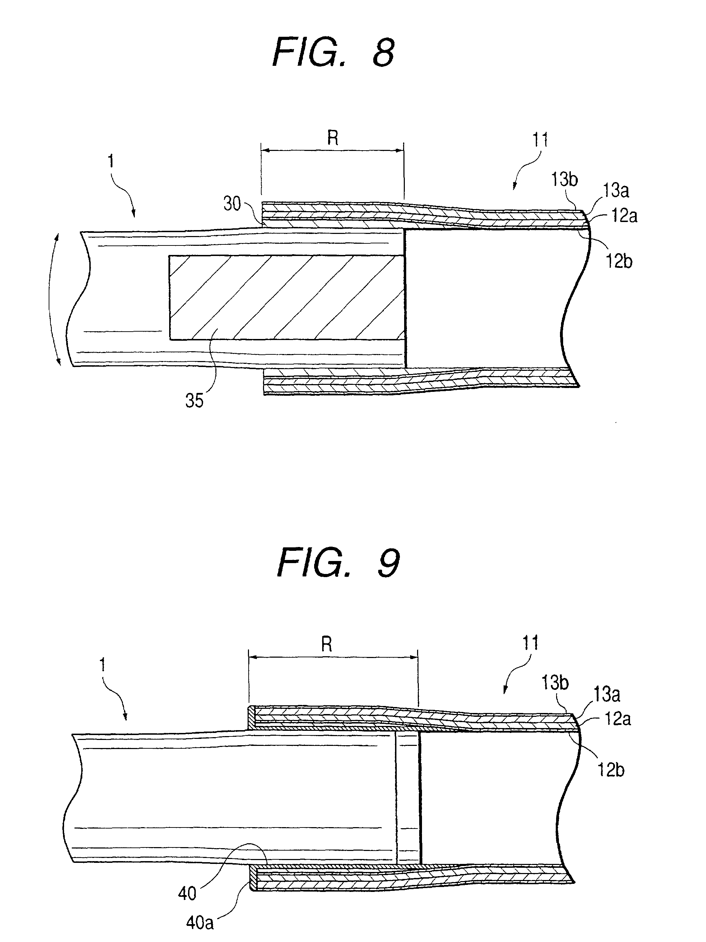

Fig. 8 is a diagram showing a seventh embodiment.

In this embodiment, a circumferential-directional prepreg 30 is wound around the innermost portion of the joint portion R of the large-diameter rod 11. Moreover, a reinforcing prepreg 35 having reinforced fibers oriented at ± 45° is partially wound around the outermost portion of the small-diameter rod 1. In this case, the reinforcing prepreg 35 is provided such that two sections opposite to each other in the radial direction and each having a predetermined width are disposed. As described above, the reinforcing prepregs are partially disposed in the circumferential direction as a substitute for winding. Thus, the bending of the rod can arbitrarily be changed according to a direction in which the rod is bent. The bending of the rod having the illustrated structure permits the rod to easily be bent in a direction indicated with an arrow. On the other hand, the rod cannot easily be bent in a direction perpendicular to the direction indicated with the arrow.

### (Eighth Embodiment)

Fig. 9 is a diagram showing an eighth embodiment.

In this embodiment, a cylindrical reinforcing member 40 having a flange 40a is detachably formed in the innermost portion of the joint portion R of the large-diameter rod 11. The reinforcing member 40 is obtained by molding a prepreg having reinforced fibers oriented to ± 45° into the cylindrical shape. The reinforcing prepreg is previously molded into the cylindrical shape so as to be wound individually from the body of the rod. In the foregoing case, a similar effect can be obtained.

### (Ninth Embodiment)

Fig. 10 is a diagram showing a ninth embodiment.

In this embodiment, reinforcing prepregs having the following structures are provided at the joint portion R of the small-diameter rod 1 and the large-diameter rod 11 having the above-mentioned body layer.

Reinforcing prepregs 51 and 53 having reinforced fibers oriented to ± 45° are wound around the inner and outer portions of the body layer in the joint portion R of the small-diameter rod 1. The force for joining the two rods varies according to the fisherman, causing the joint length to sometimes be varied. Therefore, it is preferable that both of the reinforcing prepregs 51 and 53 are longer than the length of the joint portion R. Particular, in view of an influence on the appearance, since the inner portion does not exert a considerable influence, it is preferable that the inner reinforcing prepreg 51 is longer than the outer prepreg 53. Note that the outer prepreg 53 may have a length within the joint portion R so as not to exposure over the large-diameter rod 11 when the fishing rod is used. Specifically, it is preferable that projection lengths L1 and L2 of the reinforcing prepregs 53 and 51 projecting from an end surface P2 of the large-diameter rod 11 are such that L1 is 15 mm to - 10 mm, preferably 0 mm to - 10 mm, and L2 is 10 mm to 50 mm. It is preferable that the thickness of the reinforcing layer constituted by the outer prepreg 53 is larger than the thickness of the reinforcing layer constituted by the inner reinforcing prepreg 51.

As described above, the outer reinforcing prepreg 53 of the small-diameter rod 1 is constituted by inclined-directional fiber layer (the outer reinforcing layer) oriented to ± 45°. It is preferable that the outer reinforcing layer is formed in such a manner that at least one of the following requirements is satisfied: (a) the total thickness is 0.05 mm to 0.3 mm (preferably 0.1 mm to 0.25 mm), (b) the thickness is not lower than 20 % of the body layer nor higher than 80 % of the same, and (c) assuming that the inner diameter of the rod is d and the total thickness including the body layer ist, t/d is 0.15 to 0.015 (preferably 0.06 to 0.02). When the foregoing structure is employed, a light-weight and strong joint portion can be realized.

Reinforcing prepregs 61 and 63 having reinforced fibers oriented to ± 45° are wound around the inner and outer portions of the body layer of the joint portion R of the large-diameter rod 11. If occurrence of dispersion in the joint length when a fisherman draws and joins the rods is considered, it is preferable that both of the reinforcing prepregs 61 and 63 are longer than a standard length of the joint portion R. To protect the body layer of the female rod when the joint length varies, it is preferable that the inner reinforcing prepreg 61 is longer than the outer reinforcing prepreg 63.

Also in this embodiment, the directions of the fibers of the reinforcing prepregs 51 and 53 (61 and 63) may be oriented to - 45° and + 45° (a range from ± 30° to ± 75° is also permitted). The fibers of the reinforcing prepregs need not to have the intersecting structure. The inner reinforcing prepreg and the outer reinforcing prepreg may be wound around both of the small-diameter rod and the large-diameter rod as shown in the drawing, or may be wound around either of the rod. The reinforcing prepregs may be wound around only the inside portion, the fibers which are oriented to intersect each other or oriented in the inclined direction. In addition to the inner reinforcing prepreg and the outer reinforcing prepreg, individual reinforcing prepregs (third reinforcing prepregs) may be wound around the intermediate portion or on the outside of the outer reinforcing prepreg. When the third reinforcing prepregs are wound as described above, the directions of the fibers of the inner reinforcing prepreg, the outer reinforcing prepreg (either prepreg may be omitted) and the third reinforcing prepreg may be arranged such that layers in which fibers are oriented in the axial direction and the circumferential direction if a layer in the inclined direction/the intersecting direction is present. For example, the small-diameter rod may be structured such that the fibers of the outer reinforcing prepreg are oriented in the axial direction, the inner reinforcing prepreg is omitted and the third reinforcing prepreg is wound around the outer portion of the outer reinforcing prepreg to make the directions of the fibers to be the inclined direction/the intersecting direction. Thus, the rigidity in the axial direction can be increased and deformation can be prevented. As an alternative to this, the small-diameter rod may be structured such that the fiber of the outer reinforcing prepreg is oriented into the circumferential direction, the inner reinforcing prepreg is omitted, the third reinforcing prepreg is wound around the outer portion of the outer reinforcing prepreg and the directions of the fibers are made to be the inclined direction/the intersecting direction. In this case, crush at the end surface can effectively be prevented and a state of the point contact can effectively be reinforced.

As described above, when the structure in which the inner reinforcing prepreg, the outer reinforcing prepreg and the third reinforcing prepreg are wound, it is preferable that the thickness of each of the inner reinforcing prepreg and the outer reinforcing prepreg is 0.01 mm to 1.5 mm. If the thickness of the outer reinforcing layer is larger than that of the third reinforcing layer, excess bending at the boundary can be prevented. If the rod is bent and the joint is made contact with the rod, concentrated stress can be dispersed. In thus structure in which the inner reinforcing prepreg is wound, spread of a crack from the end surface and burrs can be prevented. As a result, the strength can be increased.

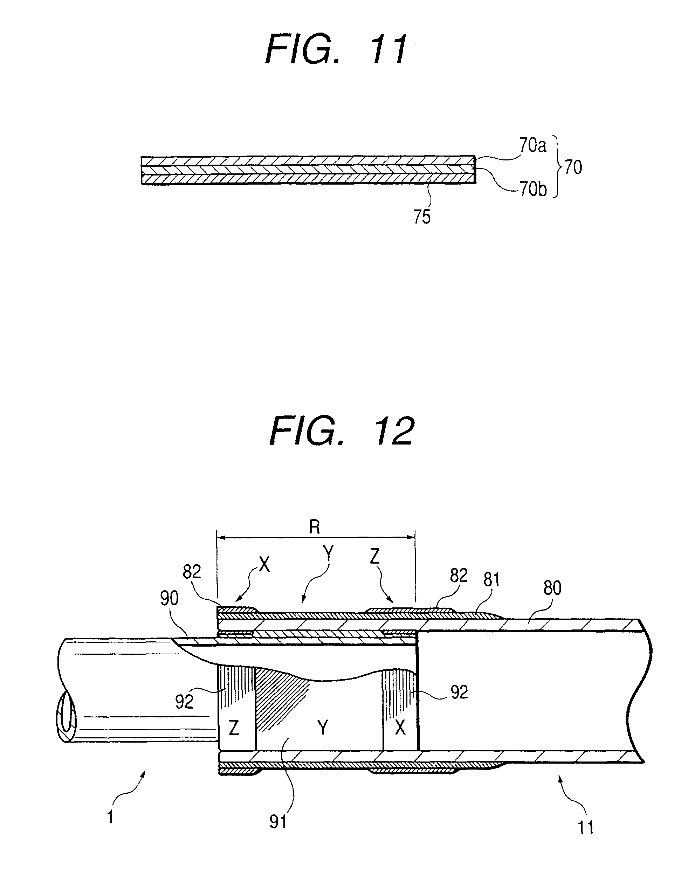

As described above, the reinforcing prepreg which is wound around the joint portion R possibly comes apart during a. winding operation because the fiber have been moved during a molding operation or the fiber are oriented in the diagonal direction. Therefore, it is preferable that the reinforcing prepreg is structured, for example, as shown in Fig. 11. That is, a woven cloth 75 made of glass fibers is superposed on a reinforcing prepreg 70 constituted by stacking a prepreg 70a in which fibers inclined by + 45° (a range from 15° to 75° is permitted, and the range from 30° to 60° is preferable) are oriented and a prepreg 70b in which fibers inclined by - 45°(a range from -15° to -75° is permitted, and the range from -30° to -60° is preferable) are oriented, and thus structured prepreg is wound around the joint portion of the rod as the reinforcing prepreg. When the woven cloth constituted by glass fibers is superposed as described above, undesirable movement of the fibers of the reinforcing prepreg in the joint portion which occurs when a molding operation is performed can be prevented, whereby dispersion can be prevented and, therefore, a strong joint portion can be realized. Moreover, since the fiber does not come apart during the operation, the rod can easily be manufactured. Although the woven cloth constituted by the glass fibers may be disposed such that its directions of the fibers are the axial direction and the circumferential direction, it is preferable that the direction is the inclined direction (± 45°) which is the same as the direction of the fibers of the reinforcing prepreg in the inclined direction. With thus inclined direction of the fiber, effective reinforcing (combination with the fibers in the inclined direction) against shearing force can be realized.

To obtain a desirable effect in joint portion of the structure shown in Fig. 11, it is preferable that the reinforcing prepregs 70a and 70b and the woven cloth 75 constituted by the glass fibers are structured as follows: the thickness of each of the prepregs 70a and 70b is 0.01 mm to 0.04 mm, the total thickness of the two prepregs is 0.05 mm or smaller, the thickness of the woven cloth 75 constituted by the glass fiber is 0.01 mm to 0.03 mm and the total thickness of the reinforcing prepreg 70 and the woven cloth 75 constituted by the glass fibers is 0.06 mm or smaller. These dimensions are not limited to the foregoing values. The structure may be employed in which the thickness of each of the prepregs 70a and 70b is 0.01 mm to 0.15 mm, the total thickness of the two prepregs is 0.3 mm or smaller, the thickness of the woven cloth 75 constituted by the glass fibers is 0.01 mm to 0.1 mm and the total thickness of the reinforcing prepreg 70 and the woven cloth 75 constituted by the glass fibers is 0.4 mm or smaller. The quantity of impregnated resin in each of the prepregs 70a and 70b is made to be 15 wt% to 70 wt% which is larger than the quantity of impregnated resin in the axial-directional fiber layer of the body layer. The quantity of impregnated resin in the woven cloth 75 constituted by the glass fibers is 0 wt% to 70 wt% (when the quantity of impregnated resin is 0 wt%, the woven cloth 75 represents a non-impregnated cloth and the resin is supplied from the prepregs 70a and 70b in forming). The fibers of the prepregs 70a and 70b have an elastic modulus of 1 ton/mm² to 90 ton/mm². When the joint portion is structured as described above, the shearing elastic modulus of the' joint portion can be raised as compared with that of the conventional structure. In addition, since the shearing deformation can be prevented, the strength of the joint portion can be increased.

A prepreg (hereinafter called a "second reinforcing prepreg") having fibers oriented in the circumferential direction may be superposed on the joint portion R constituted by superposing the woven cloth 75 constituted by the glass fibers on the reinforcing prepreg 70. Fig. 10 shows a structure that a reinforcing layer (hereinafter called a "second reinforcing layer") constituted by the second reinforcing prepreg 78 is wound around each of the inside portion (the second reinforcing layer may be wound in the reinforcing prepreg 53 which has partially been cut) of the reinforcing prepreg 53 in the tip portion of the small-diameter rod 1 and the outer portion of the reinforcing prepreg 63 in the tip portion of the large-diameter rod 11. It is preferable that the second reinforcing prepreg 78 is superposed on the reinforcing prepreg portion (the portion which is not the woven cloth side). The reinforcing prepregs 70 and 78 and the woven cloth 75 constituted by the glass fibers may previously be superimposed into a sheet shape so as to be one prepreg. When these elements are wound around the mandrel, the elements may individually be wound.

When thus second reinforcing prepreg 78 is furthermore superposed, crush of the joint portion can effectively be prevented. Therefore, it is preferable that the second reinforcing prepreg 78 is partially (a width of about 5 mm to about 20 mm) and additionally wound around the end portion of the joint portion R.

The joint portion having the above-mentioned structure may be applied to each of the above embodiments.

An example of the ratio of the thickness (the quantity of fibers) in each layer of the joint portion including the body layer, the reinforcing layers constituted by the prepregs having fibers oriented in the inclined direction and the second reinforcing layer constituted by the prepregs having fibers oriented in the circumferential direction will now be described. Referring to Fig. 12, the elements of the large-diameter rod 11 are shown as follows: reference numeral 80 designates the body layer of the large-diameter rod 11; 81, reinforcing layer; and 82, the second reinforcing layer which is wound around the reinforcing layer 81. As for the small-diameter rod 1, the body layer is given reference numeral 90 designates the body layer; 91, the reinforcing layer; and 92, the second reinforcing layer around which is wound after partially cutting the reinforcing layer 91. Referring to Fig. 12, symbols X, Y and Z represent the tip portion, the intermediate portion and the base portion of the body portion of the joint portion R.

The ratio of the quantities of fibers in each layer in the axial direction at each position in the joint portion R is determined as follows.

**Table 1**

| | Tip Portion X | Intermediate Portion Y | Bass Portion Z |
|---|---|---|---|
| Body Layer | small | intermediate | large |
| Reinforcing Layer | intermediate | large | intermediate |
| Second Reinforcing Layer | large | small | small |

The relative ratio of the quantities of fibers at each position in the axial direction is determined as described above, a tear of the tip portion X, shearing of the intermediate portion Y can be prevented, and the rigidity balance of the base portion Z of the body portion can be improved. The above-mentioned relative ratio of the quantities of the fibers in the joint portion in the axial direction may be applied to only one of the two rods. But, it is preferable that the ratio is applied to both of the rods. The above-mentioned ratio of the quantities of the fibers may be applied to all of the embodiments.

It is preferable that the structure shown in Fig. 12 is arranged such that the reinforcing layer 91 of the small-diameter rod 1 is wound around the overall circumference. But, the reinforcing layer 91 may be divided into a plurality of sections so as to be partially provided for a portion in the circumferential direction (see Fig. 8), so as to reduce the weight of the rod. When fibers of the reinforcing layers 81 and 91 have elastic modulus which is higher than the elastic modulus of the fibers of the body layers 80 and 90 in the axial direction, reinforcement can effectively be performed.

The embodiments of the present invention are structured as described above. The structures (1) to (5) of the first embodiment may arbitrarily be applied to the embodiments other than the first embodiment. Moreover, the following changes of each embodiment are permitted: the number of prepregs which constitute the body of the rod, the quantities of impregnated resin, the thickness, the number of windings, the direction of the employed reinforced fibers, the quantities of the fibera and the elastic modulus. For example, the fibers of the body of the rod in the axial direction is reduced along the direction toward the end, and the quantity of the fibers in the joint portion in the circumferential direction is increased along the direction toward the end. Thus, deflection and flexibility of the joint portion can be improved. Although the swing type rod has been described in the foregoing embodiments, the present invention may be applied to the faucet joint structure and the parallel joint structure.

When the reinforcing layer in which the fibers intersect one another (inclined) is wound around the joint portion as employed in each embodiment, the amount of shearing deformation in the joint portion can be reduced. Therefore, the overall rigidity of the rod can be improved. In the foregoing case, the elastic modulus of the fibers in the reinforcing layer is raised so that the rigidity is furthermore increased.

### (Tenth Embodiment)

The fishing rod according to a tenth embodiment is applied to fishing rods of a type having all rods formed into solid structures and fishing rods of a type having a hollow rod, which is structured such that a rod arranged to be more forward than the hollow rod is formed into the solid structure. The hollow rod can be manufactured, after winding reinforced fiber prepreg impregnated reinforced fibers with synthetic resin, by performing a heating step, a step for removing the mandrel and a polishing step. Note that the structure of the reinforced fiber prepreg (a fiber orienting direction, a quantity of impregnated resin, the number of layers and the structure of the reinforced fibers) is not limited. The solid rod can be constituted by using, for example, epoxy resin as matrices and by binding reinforced fibers, such as carbon fibers, in the axial direction. Then, the inside portion of a pipe shape member is filled with the reinforced fibers, and then thermal hardening is performed. Then, the reinforced fibers are drawn. As an alternative to this, a core constituted by carbon fiber or the like is prepared, and then the prepreg is wound around the core. Then, thermal hardening is performed. As a matter of course, the number of reinforced fibers which must be formed into a bundle, the diameter of the fiber, the direction in which the reinforced fibers of' the prepreg, which must be wound around as described above, is oriented and the quantity of the impregnated synthetic resin are not limited.

Referring to Fig. 13, a preferred structure of joint portions 103 for connecting a large-diameter rod and a small-diameter rod to each other will now be described.

Referring to Fig. 14, reference numeral 110 represents a small-diameter rod and 120 represents a large-diameter rod. Each rod is formed into a solid structure. Each rod is constituted by winding prepregs 110b and 120b each having reinforced fibers oriented in the circumferential direction around cores 110a and 120a having a tapered shape. The two solid rode 110 and 120 are joined to each other in the joint portion 130. Note that a structure in which the prepregs 110b and 120b are not wound as described above may be employed.

Each joint portion 130 is formed into a hollow pipe shape, the joint portion 130 being secured to the tip portion of the large-diameter rod 120. That is, the joint portion 130 is formed individually from each rod, and then the joint portion 130 is secured to the tip portion of the large-diameter rod 120 so as to be formed into the pipe shape. Note that the joint portion 130 may be secured to the base portion of the small-diameter rod 110. In the foregoing case, the small-diameter rod 110 constructs the forward portion of the joint portion.

The joint portion 130 is constituted by winding a reinforcing prepreg 131 having reinforced fibers oriented in an inclined direction. Specifically, a prepreg having reinforced fibers oriented to make an angle of + 45° from the axial direction and a prepreg having reinforced fibers oriented to make an angle of - 45° are superposed to each other. Thus, the joint portion 130 is formed so that the oriented reinforced fibers intersect one another.

As described above, the reinforcing prepreg 131 having the reinforced fibers oriented to intersect one another is provided in the joint portion of the two rods. Therefore, the shearing elastic modulus of the joint portion can be improved. Thus, shearing deformation and plastic bending (warp in the form of a wedge facing side) can effectively be prevented, whereby the strength of the joint portion can be improved. Since the strength can be increased as described above, the length of the joint portion can be shortened while required strength is being maintained. Therefore, the overall weight of the fishing rod can be reduced.

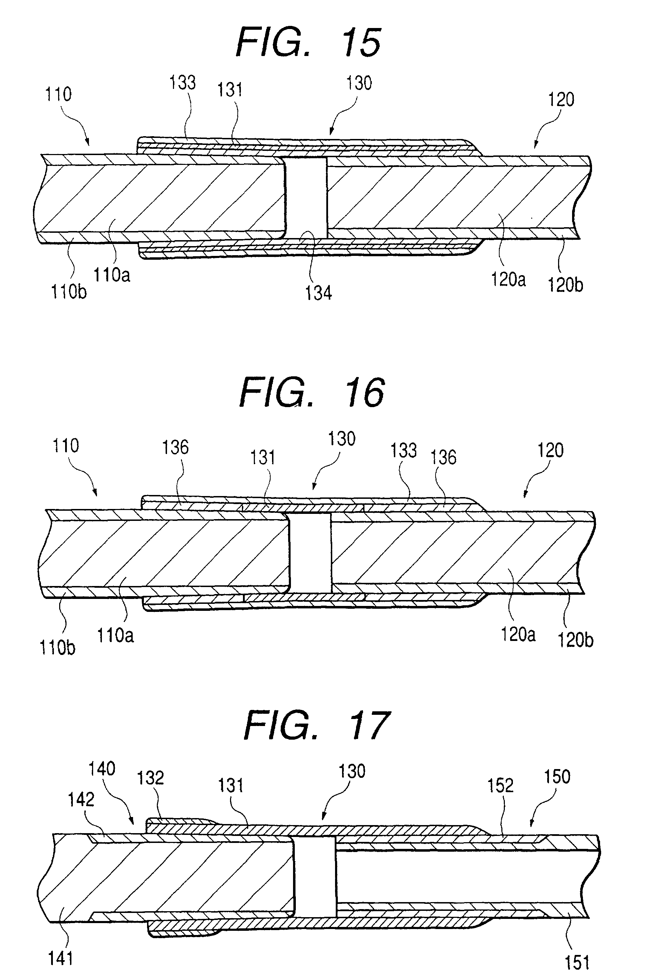

The specific structure of the reinforcing prepreg which is provided in the joint portion and a variety of modifications will now be described.
(6) Although the reinforcing prepreg 131 has the reinforced fibers oriented to intersect one another, a prepreg having a simple structure may be employed in which the reinforced fibers are oriented in the inclined direction. Additionally, in case that the reinforced fibers are intersected, a structure in which reinforced fibers are vertically superposed to intersect one another or a structure in which the reinforced fibers are previously plain-woven may be employed as a substitute for superposing of sheets each having the reinforced fibers oriented into one direction.
(7) Since a direction in which the shearing elastic modulus is made to be maximal is 45°, it is most preferable that the angle of inclination of the reinforced fibers is ± 45°. In consideration of facilitating the winding operation and a necessity for preventing crush, the angle of inclination may be ± 30° to ± 60°. Since a more desirable effect can be obtained as compared with the conventional structure, the angle may be ± 15° to ± 75°.
(8) Another prepreg may be wound in the reinforcing prepreg 131. Since, for example, the tip portion of the reinforcing prepreg 131 can easily be crushed when the fishing rod has been deflected greatly, it is preferable that a prepreg 132 having reinforced fibers oriented in the circumferential direction is wound around the foregoing portion, as shown in Fig. 14. As an alternative to this, prepregs 133 and 134 each having the reinforced fibers oriented in the circumferential direction may individually be added, for example, as shown in Fig. 15. In this case, although the joint portion is formed in which the reinforcing prepreg 131 is interposed in each of the prepregs 133 and 134, the outer prepreg 133 may be omitted. It is preferable that the thickness of the reinforcing prepreg 131 is 0.02 mm or larger, in view of strength against shearing stress is improved and a reinforcing effect. Further, to prevent non-uniform thickness and meandering of the fibers, it is preferable that the thickness is 1.5 mm or smaller. If the number of windings is too large, a molding state becomes instable, and if the number is too small, an instable seam is undesirably formed. Therefore, it is preferable that the winding number is about 2 to 10.
(9) As for the layout of the reinforcing prepreg 131 in the lengthwise direction, as shown in Figs. 14 and 15, a structure in which the reinforcing prepreg 131 is wound around the overall body (100 %) of the joint portion may be employed. As an alternative to this, as shown in Pig. 16, a structure in which the reinforcing prepreg 131 is partially wound to improve the reinforcing effect may be employed. Specifically, when the fishing rod is deflected, the end surfaces of the solid rods 110 and 120 are brought into contact in the reinforcing prepreg 131. Thus, stress is most intensely exerted on the portion of the reinforcing prepreg 131. Therefore, a structure may be employed in which the reinforcing prepreg 131 is superposed on the central region of the prepreg 133 in which the end surfaces of the rods are brought into contact, in addition to the prepreg 133 having the reinforced fibers oriented in the circumferential direction. In the portions other than the reinforcing prepreg 131, a prepreg 136 having the reinforced fibers oriented in the circumferential direction may be superposed. As described above, the reinforcing prepreg 131 may be wound around a variety of axial-directional positions in the joint portion 130. Note that the joint portion having the reinforcing prepreg may be molded integrally with the large-diameter rod or the small-diameter rod.

Note that the structures (6) to (9) may arbitrarily be combined with one another.

Fig. 17 shows a structure that the base portion of the small-diameter rod 140 in the form of a solid structure is, by the joint portion 130, joined to the tip portion of the large-diameter rod 150 in the form of a hollow structure. When the hollow rod 150 is employed, since the tip portion can easily be crushed, it is preferable that a prepreg 152 having the reinforced fibers oriented to intersect one another is wound around the outer surface of a prepreg 151 having the reinforced fibers oriented in the axial direction. Also, since the base portion of the solid small-diameter rod 140 can easily be crushed owing to large force exerted on the base portion, it is preferable that a prepreg 142 having the reinforced fibers oriented to intersect one another is wound around the outer surface of a core 141. Although the joint portion 130 shown in Fig. 17 has the same structure as that shown in Fig. 14, a structure shown in Fig. 15 or 16 may be employed.

The embodiment described above may be varied, that is, the number of prepregs which constitute the body of the rod, the quantity of impregnated resin, the thickness, the number of windings, the direction of the employed reinforced fibers, the quantity of the fibers and the elastic modulus may be varied. Although the parallel joint type rod has been described in the embodiments, the present invention may be applied to the faucet joint structure and a swing structure portion in a case where a hollow rod is included.

According to the present invention, the prepreg having the reinforced fibers oriented in the inclined direction is provided in the joint portion between the rods. Thus, the strength of the joint portion can be increased, plastic bending and shearing deformation can be prevented, and thus a fishing rod with desirable joint state can be obtained. Moreover, the length of the joint portion can be shortened, to thereby reduce the overall weight of the fishing rod.

## Claims

1. A fishing rod comprising:
a small-diameter rod (1) having a base portion; and
a large-diameter rod (11) having a tip portion, said large-diameter rod (11) is joint to said small-diameter rod (1),
a reinforcing prepreg (5, 6, 7, 15, 16, 17, 20, 22, 23, 35, 51, 53, 61, 63, 70, 81, 91) having reinforced fibers oriented in an inclined direction with respect to an axial direction of the fishing rod is disposed around a joint portion (R) joining the small-diameter rod (1) and the large-diameter rod (11),
**characterized in that**
said reinforcing prepreg (5, 6, 7, 15, 16, 17, 20, 22, 23, 35, 51, 53, 61, 63, 70, 81, 91) is wound around the base portion of the small-diameter rod (1) and/or the tip portion of the large-diameter rod (11) so as to define the joint portion (R).

2. A fishing rod according to claim 1, wherein at least said small-diameter rod (110, 140) which is disposed in a forward portion of said joint portion (130) is formed into a solid structure.

3. A fishing rod according to claim 1 or 2, wherein said reinforced fibers of said reinforcing prepreg (5, 6, 7, 15, 16, 17, 20, 22, 23, 35, 40, 51, 53, 61, 63, 70, 81, 91, 131, 142, 152) are oriented to be intersected to one another.

4. A fishing rod according to claim 1, wherein said reinforcing prepreg (5, 7, 15, 17, 22, 23, 51, 53, 61, 63, 81, 91) having said reinforced fibers oriented in an inclined direction includes a first prepreg (15, 17, 23, 61, 63, 81) wound around said joint portion (R) of said large-diameter rod (11) and a second prepreg (5, 7, 22, 51, 53, 91) wound around said joint portion (R) of said small-diameter rod (1), and the reinforced fibers of said first and second prepregs (5, 7, 15, 17, 22, 23, 51, 53, 61, 63, 81, 91) are oriented to intersect one another.

5. A fishing rod according to claim 3 or 4, wherein said reinforced fibers are oriented to make an angle in the range of substantially ± 15° to ± 75° with respect to an axial direction of the fishing rod.

6. A fishing rod according to any one of claims 1 to 5, wherein a woven cloth (75) constituted by glass fibers is superposed on said reinforcing prepreg (5, 6, 7, 15, 16, 17, 20, 22, 23, 35, 40, 51, 53, 61, 63, 70, 81, 91, 131, 142, 152).

7. A fishing rod according to claim 2, further comprising:
a prepreg (142, 152) having reinforced fibers oriented to be intersected to one another and wound around at least one of a base portion of said small-diameter rod (140) and a tip portion of said large-diameter rod (150).

8. A fishing rod according to any one of claims 1 to 7, wherein a prepreg (3a, 12a, 21, 25, 136, 151) or a core (141) of at least one of said small-diameter rod (1, 110, 140) and said large-diameter rod (11, 120, 150) is at least partially cut in said joint portion (R, 130), and said reinforcing prepreg (7, 17, 22, 23, 51, 53, 61, 63, 131, 142, 152) is disposed in the cut portion.

9. A fishing rod according to any one of claims 1 and 3-6, wherein said reinforcing prepreg (51, 53) comprises: a third prepreg (51) wound around an inner periphery of said small-diameter rod (1); and a fourth prepreg (53) wound around an outer periphery of said small-diameter rod (1), and said third prepreg (51) is formed longer in the axial direction than said fourth prepreg (53).

10. A fishing rod according to any one of claims 1, 3-6 and 9, wherein said reinforcing prepreg (61,63) comprises: a fifth prepreg (61) wound around an inner periphery of said large-diameter rod (11); and a sixth prepreg (63) wound around an outer periphery of said large-diameter rod (11), said fifth prepreg (61) is formed longer in the axial direction than said sixth prepreg (63).

11. A fishing rod according to any one of claims 1-4, wherein at least one of said small-diameter rod (1, 110, 140) and said large-diameter rod (11, 120, 150) in said joint portion (R, 130) includes a circumferential-direction prepreg (3d, 12d, 6b, 16b, 8, 18, 19, 21, 25, 30, 78, 82, 132, 133, 136) having reinforced fibers oriented in the circumferential direction.

12. A fishing rod according to claim 11, wherein a prepreg (3a, 12a, 21, 25) of at least one of said small-diameter rod (1) and said large-diameter rod (11) is at least partially cut in said joint portion (R), and said circumferential-direction prepreg (3d, 12d, 78) is disposed in the cut portion.

13. A fishing rod according to one of claims 11 and 12, wherein said reinforced fibers are oriented to make an angle in the range of substantially ± 30° to ± 60° with respect to an axial direction of the fishing rod.

## Patentansprüche

1. Angelrute mit:
einer Rute (1) mit kleinem Durchmesser, die einen Basisabschnitt hat; und
einer Rute (11) mit großem Durchmesser, die einen Spitzenabschnitt hat, wobei die Rute (11) mit großem Durchmesser mit der Rute (1) mit kleinem Durchmesser verbunden ist,
einem verstärkenden Prepreg (5, 6, 7, 15, 16, 17, 20, 22, 23, 35, 51, 53, 61, 63, 70, 81, 91), das verstärkende Fasern hat, die in einer geneigten Richtung in Bezug auf eine axiale Richtung der Angelrute ausgerichtet sind, das rund um einen Verbindungsabschnitt (R ), der die Rute (1) mit kleinem Durchmesser und die Rute (11) mit großem Durchmesser verbindet, angeordnet ist,
**dadurch gekennzeichnet, dass**
das verstärkende Prepreg (5, 6, 7, 15, 16, 17, 20, 22, 23, 35, 51, 53, 61, 63, 70, 81, 91) um den Basisabschnitt der Rute (1) mit kleinem Durchmesser und/oder den Spitzenabschnitt der Rute (11) mit großem Durchmesser gewickelt ist, um den Verbindungsabschnitt (R ) zu kreuzen.

2. Angelrute nach Anspruch 1, wobei zumindest die Rute (110, 140) mit kleinem Durchmesser, die in einer Vorwärtsposition des Verbindungsabschnittes (130) angeordnet ist, in einer festen Struktur gebildet ist.

3. Angelrute nach Anspruch 1 oder 2, wobei die verstärkten Fasern des verstärkenden Prepregs (5, 6, 7, 15, 16, 17, 20, 22, 23, 35, 40, 51, 53, 61, 63, 70, 81, 91, 131, 142, 152) ausgerichtet sind, um einander zu kreuzen.

4. Angelrute nach Anspruch 1, wobei das verstärkende Prepreg (5, 7, 15, 17, 20, 22, 23, 51, 53, 61, 63, 81, 91), das die verstärkten Fasern in einer geneigten Richtung orientiert hat, ein erstes Prepreg (15, 17, 23, 61, 63, 81) enthält, gewickelt rund um den Verbindungsabschnitt (R ) der Rute (11) mit großem Durchmesser, und einen zweiten Prepreg (5, 7, 22, 51, 53, 91), gewickelt rund um den Verbindungsabschnitt (R ) der Rute (1) mit kleinem Durchmesser, und die verstärkten Fasern der ersten und zweiten Prepregs (5, 7, 15, 17, 22, 23, 51, 53, 61, 63, 81, 91) ausgerichtet sind, um sich einander zu kreuzen.

5. Angelrute nach Anspruch 3 oder 4, wobei die verstärkten Fasern ausgerichtet sind, um einen Winkel in einem Bereich von im Wesentlichen ±15° bis ±75° in Bezug zu einer axialen Richtung der Angelrute zu bilden.

6. Angelrute nach einem der Ansprüche 1 bis 5, wobei ein durch Glasfasern gebildetes, Gewebestück (75) auf das vertärkende Prepreg (5, 6, 7, 15, 16, 17, 20, 22, 23, 35, 40, 51, 53, 61, 63, 70, 81, 91, 131, 142, 152) aufgelegt ist.

7. Angelrute nach Anspruch 2, außerdem mit:
einem Prepreg (142, 152), das verstärkte Fasern hat, ausgerichtet, um einander zu kreuzen, und das zumindest um entweder den Basisabschnitt der Rute (140) mit kleinem Durchmesser oder einen Spitzenabschnitt der Rute (150) mit großem Durchmesser gewickelt ist.

8. Angelrute nach einem der Ansprüche 1 bis 7, wobei ein Prepreg (3a, 12a, 21, 25, 136, 151) oder ein Kern (141) von zumindest der Rute (1, 110, 140) mit kleinem Durchmesser oder der Rute (11, 120, 150) mit großem Durchmesser zumindest teilweise in dem Verbindungsabschnitt (R, 130) geschnitten ist, und das verstärkende Prepreg (7, 17, 22, 23, 51, 53, 61, 63, 131, 142, 152) in dem Schnittabschnitt angeordnet ist.

9. Angelrute nach einem der Ansprüche 1 und 3- 6, wobei das verstärkende Prepreg (51, 53) aufweist: ein drittes Prepreg (51), gewickelt um einen Innenumfang der Rute (1) mit kleinem Durchmesser, und ein viertes Prepreg (53), gewickelt rund um einen Außenumfang der Rute (1) mit kleinem Durchmesser, und das dritte Prepeg (51) in der axialen Richtung länger als das vierte Prepreg (53) gebildet ist.

10. Angelrute nach einem der Ansprüche 1, 3 -6 und 9, wobei das verstärkende Prepeg (61, 63) aufweist: ein fünftes Prepreg (61), gewickelt um einen Innenumfang der Rute (11) mit großem Durchmesser; und ein sechstes Prepreg (63), gewickelt um den Außenumfang der Rute (11) mit großem Durchmesser, wobei das fünfte Prepreg (61) in der axialen Richtung länger als das sechste Prepreg (63) gebildet ist.

11. Angelrute nach einem der Ansprüche 1 - 4, wobei zumindest entweder die Rute (1, 110, 140) mit kleinem Durchmesser oder die Rute (11, 120, 150) mit großem Durchmesser in dem Verbindungsabschnitt (R, 130) ein Prepreg (3d, 12d, 6b, 16b, 8, 18, 19, 21, 25, 30, 78, 82, 132, 133, 136) in Umfangsrichtung enthält, das verstärkte Fasern hat, die in Umfangsrichtung orientiert sind.

12. Angelrute nach Anspruch 11, wobei ein Prepreg (3a, 12a, 21, 25) zumindest entweder der Rute (1) mit kleinem Durchmesser oder der Rute (11) mit großem Durchmesser zumindest teilweise in dem Verbindungsabschnitt (R ) geschnitten ist, und das Prepreg in Umfangsrichtung (3d, 12d, 78) in dem geschnittenen Abschnitt angeordnet ist.

13. Angelrute nach einem der Ansprüche 11 oder 12, wobei die verstärkten Fasem ausgerichtet sind, um einen Winkel in dem Bereich von im Wesentlichen ±30° bis ±60° in Bezug zu einer axialen Richtung der Angelrute zu bilden.

## Revendications

1. Canne à pêche, comportant :
une tige de petit diamètre (1) ayant une partie de base, et
une tige de grand diamètre (11) ayant une partie de pointe, ladite tige de grand diamètre (11) étant reliée à ladite tige de petit diamètre (1),
un pré-imprégné de renforcement (5, 6, 7, 15, 16, 17, 20, 22, 23, 35, 51, 53, 61, 63, 70, 81, 91), ayant des fibres renforcées orientées dans une direction inclinée par rapport à une direction axiale de la canne à pêche, disposé autour d'une partie de liaison (R) reliant la tige de petit diamètre (1) et la tige de grand diamètre (11),
**caractérisée en ce que**
ledit pré-imprégné de renforcement (5, 6, 7, 15, 16, 17, 20, 22, 23, 35, 51, 53, 61, 63, 70, 81, 91) est enroulé autour de la partie de base de la tige de petit diamètre (1) et/ou la partie de pointe de la tige de grand diamètre (11), de manière à définir la partie de liaison (R).

2. Canne à pêche selon la revendication 1, dans laquelle au moins ladite tige de petit diamètre (110, 140), qui est disposée dans une partie avant de ladite partie de liaison (130), est formée en une structure solide.

3. Canne à pêche selon la revendication 1 ou 2, dans laquelle lesdites fibres renforcées dudit pré-imprégné de renforcement (5, 6, 7, 15, 16, 17, 20, 22, 23, 35, 40, 51, 53, 61, 63, 70, 81, 91, 131, 142, 152) sont orientées pour se couper les unes les autres.

4. Canne à pêche selon la revendication 1, dans laquelle ledit pré-imprégné de renforcement (5, 7, 15, 17, 22, 23, 51, 53, 61, 63, 81, 91) ayant lesdites fibres renforcées orientées dans une direction inclinée comporte un premier pré -imprégné (15, 17, 23, 61, 63, 81) enroulé autour de ladite partie de liaison (R) de ladite tige de grand diamètre (11), et un deuxième pré-imprégné (5, 7, 22, 51, 53, 91) enroulé autour de ladite partie de liaison (R) de ladite tige de petit diamètre (1), et les fibres renforcées desdits premier et second pré-imprégnés (5, 7, 15, 17, 22, 23, 51, 53, 61, 63, 81, 91) sont orientées pour se couper les unes les autres.

5. Canne à pêche selon la revendication 3 ou 4, dans laquelle lesdites fibres renforcées sont orientées pour former un angle dans la plage de sensiblement ± 15° à ± 75° par rapport à une d irection axiale de la canne à pêche.

6. Canne à pêche selon l'une quelconque des revendications 1 à 5, dans laquelle un tissu tissé (75) constitué par des fibres de verre est superposé sur ledit pré -imprégné de renforcement (5, 6, 7, 15, 16, 17, 20, 22, 23, 35, 40, 51, 53, 61, 63, 70, 81, 91, 131, 142, 152).

7. Canne à pêche selon la revendicat ion 2, comportant de plus :
un pré -imprégné (142, 152) ayant des fibres renforcées orientées pour se couper les unes les autres, et enroulé autour d'au moins un élément parmi une pa rtie de base de ladite tige de petit diamètre (140) et une partie de pointe de ladite tige de grand diamètre (150).

8. Canne à pêche selon l'une quelconque des revendications 1 à 7, dans laquelle un pré -imprégné (3a, 12a, 21, 25, 136, 151) ou un noyau (141) d'au moins un élément parmi ladite tige de petit diamètre (1, 110, 140) et ladite tige de grand diamètre (11, 120, 150) est au moins partiellement découpé dans ladite partie de liaison (R, 130), et ledit pré-imprégné de renforcement (7, 17, 22, 23, 51, 53, 61, 63, 131, 142, 152) est disposé dans la partie découpée.

9. Canne à p êche selon l'une quelconque des revendications 1 et 3 à 6, dans laquelle ledit pré-imprégné de renforcement (51, 53) comporte : un troisième pré -imprégné (51) enroulé autour d'une périphérie intérieure de ladite tige de petit diamètre (1), et un quatrième pré -imprégné (53) enroulé autour d'une périphérie extérieure de ladite tige de petit diamètre (1), et ledit troisième pré -imprégné (51) est formé plus long dans la direction axiale que ledit quatrième pré-imprégné (53).

10. Canne à pêche selon l'une quelcon que des revendications 1, 3 à 6 et 9, dans laquelle ledit pré-imprégné de renforcement (61, 63) comporte : un cinquième pré -imprégné (61) enroulé autour d'une périphérie intérieure de ladite tige de grand diamètre (11), et un sixième pré -imprégné (63) enro ulé autour d'une périphérie extérieure de ladite tige de grand diamètre (11), ledit cinquième pré -imprégné (61) est formé plus long dans la direction axiale que ledit sixième pré-imprégné (63).

11. Canne à pêche selon l'une quelconque des revendications 1 à 4, dans laquelle au moins un élément parmi ladite tige de petit diamètre (1, 110, 140) et ladite tige de grand diamètre (11, 120, 150) dans ladite partie de liaison (R, 130) comporte un pré-imprégné de direction circonférentielle (3d, 12d, 6b, 16b, 8, 18, 19, 21, 25, 30, 78, 82, 132, 133, 136) ayant des fibres renforcées orientées dans la direction circonférentielle.

12. Canne à pêche selon la revendication 11, dans laquelle un pré -imprégné (3a, 12a, 21, 25) d'au moins un élément parmi ladite tige de petit diamètre (1) et ladite tige de grand diamètre (11) est au moins partiellement découpé dans ladite partie de liaison (R), et ledit pré -imprégné de direction circonférentielle (3d, 12d, 78) est disposé dans la partie découpée.

13. Canne à pêche selon l'une des revendications 11 ou 12, dans laquelle lesdites fibres renforcées sont orientées pour former un angle dans la plage allant de sensiblement ± 30° à ± 60° par rapport à une direction axiale de la canne à pêche.
